**Europäisches Patentamt**

**European Patent Office**

**Office européen des brevets**

(19)

(11) Veröffentlichungsnummer : **0 085 086**
**B1**

# (12) EUROPÄISCHE PATENTSCHRIFT

(45) Veröffentlichungstag der Patentschrift :
28.08.85

(21) Anmeldenummer : 82902449.6

(22) Anmeldetag : 13.08.82

(86) Internationale Anmeldenummer :
PCT/EP 82/00171

(87) Internationale Veröffentlichungsnummer :
WO/8300641 (03.03.83 Gazette 83/06)

(51) Int. Cl.⁴ : **B 05 C 15/00**, B 05 D 1/02,
B 01 D 50/00

(54) VERFAHREN UND ANLAGE ZUR ENTFERNUNG VON VERUNREINIGUNGEN AUS EINEM LÖSUNGSMITTELDÄMPFE ENTHALTENDEN GASSTROM.

(30) Priorität : 14.08.81 DE 3132292

(43) Veröffentlichungstag der Anmeldung :
10.08.83 Patentblatt 83/32

(45) Bekanntmachung des Hinweises auf die Patenterteilung : 28.08.85 Patentblatt 85/35

(84) Benannte Vertragsstaaten :
AT BE CH DE FR GB LI NL SE

(56) Entgegenhaltungen :
DE-A- 2 511 181
FR-A- 2 224 215
GB-A- 139 488
GB-A- 2 057 912
US-A- 4 265 642

(73) Patentinhaber : LOHMANN GmbH & CO KG
Irlicher Strasse 55
D-5450 Neuwied 12 (DE)

(72) Erfinder : BARTH, Peter
Joh. Gott. Herder-Strasse
D-5450 Neuwied 12 (DE)

(74) Vertreter : Patentanwälte Dipl.-Ing. Splanemann
Dipl.-Chem. Dr. B. Reitzner
Tal 13
D-8000 München 2 (DE)

## Beschreibung

Aufgrund von gesetzlichen Auflagen und/oder aus wirtschaftlichen Gründen müssen bei Produktions- und Arbeitsprozessen freiwerdende Lösungsmittel außer Wasser zurückgewonnen werden. Derartige Produktions- und Arbeitsprozesse umfassen chemische Reaktionen, z. B. Polymerisationsreaktionen, Fällungsreaktionen, thermische Zersetzungsreaktionen und dergl.; zu den Arbeitsprozessen gehören beispielsweise die Beschichtung, Imprägnierung oder Besprühung von beliebigen Gegenständen mit Lösungen. Wenn das Lösungsmittel durch Verdampfung in einem warmen oder heißen Trägergasstrom entfernt wird, können auch die nicht flüchtigen oder schwer flüchtigen Lösungsbestandteile als Verunreinigungen in den Gasstrom gelangen. Diese Gefahr tritt insbesondere beim Sprühtrocknen von Lösungen oder beim Besprühen von Gegenständen mit Beschichtungs- und Imprägnierlösungen, z. B. in der Anstrichtechnik, auf.

Bei den Verunreinigungen kann es sich um feste und flüssige, insbesondere hochsiedende Substanzen handeln, z. B. um polymere Anstrich- und Lackteilchen, aus Polymerisaten stammende Restmonomere, Katalysatorsubstanzen, Pigmente, Staubpartikel, Produkte von thermischen Zersetzungen, wie teer- und harzartige Produkte oder Brenzprodukte sowie um aggressive oder korrodierende Substanzen.

Damit diese Substanzen nicht in den Kondensations- oder Adsorptionsteil einer Lösungsmittel-Rückgewinnungsvorrichtung eingeschleppt werden und dort zu Verschmutzungen führen bzw. das rückgewonnene Lösungsmittel bzw. Lösungsmittelgemisch verunreinigen, muß der die Lösungsmitteldämpfe sowie die Verunreinigungen enthaltende Gasstrom vorher gereinigt werden.

Zur Entfernung von Verunreinigungen in Form von festen oder flüssigen Schwebeteilchen sind mechanische Einrichtungen, wie z. B. Zyklone oder Filter bekannt, zu deren Betrieb im Hinblick auf den Reinigungseffekt aber relativ viel Energie aufgewandt werden muß. Ähnliches gilt für die Elektrofilter.

Es ist ferner bekannt, sehr feinen Staub, der infolge seiner geringen Teilchendruchmesser nicht mehr in einem Fliehkraftabscheider erfaßt werden kann, dadurch abzuscheiden, daß in den Fliehkraftabscheider Wasser eingespritzt wird (vgl. z. B. Ullmanns Enzyklopädie der Technischen Chemie, Band 1 (1951) Seite 374). Durch eine solche Waschvorrichtung werden die feinsten Staubteilchen an die Waschflüssigkeit gebunden, die durch Tropfenfänger aus dem Luftstrom entfernt wird.

Die Abscheidung von Schwebeteilchen durch Waschen mit Wasser hat jedoch bei einem Lösungsmitteldämpfe enthaltenden Gasstrom den Nachteil, daß das Wasser die Dämpfe von mit Wasser mischbaren Lösungsmitteln absorbiert, wodurch die Lösungsmittel verlorengehen bzw. nur mit einem großen Aufwand wiedergewonnen werden können, da sie im Waschwasser im allgemeinen nur in einer geringen Konzentration enthalten sind. Ferner werden bei Lösungsmittelgemischen die hydrophoben Lösungsmittelkomponenten nicht aus dem Dampfgemisch ausgewaschen, während gleichzeitig ein Teil des Waschwassers in den Dampfzustand übergeht. Bei der anschließenden Kondensation erhält man ein Zweiphasengemisch, dessen hydrophobe Komponente häufig in der wäßrigen Phase emulgiert ist, so daß die Phasentrennung erschwert ist. Infolge der Auswaschung der hydrophilen Lösungsmittelkomponente entspricht die Zusammensetzung der hydrophoben Lösungsmittelkomponente nicht mehr der ursprünglichen Zusammensetzung, so daß das Lösungsmittel nicht mehr ohne weiteres in den Prozeß zurückgeleitet werden kann, sondern mit einer frischen hydrophilen Lösungsmittelkomponente angereichert werden muß.

Schließlich handelt es sich bei den ausgewaschenen Schwebeteilchen in vielen Fällen um wiederverwertbare Substanzen, z. B. um Lack- oder Harzteilchen. Wenn diese Teilchen in einer wäßrigen Suspension vorliegen, ist eine Aufarbeitung äußerst schwierig.

Aus der DE-A-2 511 181 ist ein Verfahren zur Reinigung von Abgasen bekannt, die mit organischen Verunreinigungen verunreinigt sind. Die organischen Verunreinigungen werden mit Hilfe eines in der Flüssigphase eingesetzten hochsiedenden organischen Öls ausgewaschen. Diese Öle sind in der Regel nicht Bestandteile des Prozesses und müssen zusätzlich in der Prozeß eingebracht werden. Sind diese Öle in Einzelfällen Bestandteile des Prozesses so sind sie mit den zu entfernenden Verunreinigungen identisch, d. h. sie werden nicht zur Entfernung anderer Verunreinigungen verwendet. Eine Wiedergewinnung der Öle ist nicht vorgesehen.

Der Erfindung liegt die Aufgabe zugrunde, die den bekannten Waschverfahren anhaftenden Nachteile zu beheben und ein Verfahren sowie eine Anlage zur Entfernung von Verunreinigungen aus einem Lösungsmitteldämpfe enthaltenden Gasstrom zur Verfügung zu stellen, wonach einerseits die Verunreinigungen wirksam entfernt werden und andererseits aus dem Gasstrom ein Lösungsmittel bzw. Lösungsmittelgemisch erhalten wird, das möglichst ohne besonderen Aufwand wiederverwendbar ist.

Diese Aufgabe wird erfindungsgemäß dadurch gelöst, daß man den Gasstrom zur Entfernung der darin als flüssige oder feste Schwebeteilchen enthaltenen Verunreinigungen mit dem Kondensat eines oder mehrerer darin enthaltener Lösungsmitteldämpfe wäscht, das mit den Schwebeteilchen verunreinigte Gemisch in eine die Verunreinigungen enthaltende Fraktion und in eine das Lösungsmitel in flüssiger oder in Dampfform enthaltende Kopffraktion trennt und das Lösungsmittelkondensat aus dem Gasstrom gewinnt.

Vorzugsweise wäscht man den Gasstrom mit einer Lösungsmittel-Kondensatfraktion, welche die größte Affinität zu den zu entfernenden Verunreinigungen hat. Hierdurch wird nicht nur der Auswascheffekt verbessert, sondern es fallen die Verunreinigungen auch in einer Form an, in welcher sie ohne besondere Aufarbeitung wieder in den Prozeß zurückgeführt werden können, wenn es sich um verwertbare Substanzen handelt. Beispielsweise haben Harzteilchen eine große Affinität zu hydrophoben Lösungsmitteln, wodurch beim Auswaschen eine unmittelbar wiederverwendbare Harzlösung erhalten wird. Allgemein werden polare Substanzen bevorzugt durch polare Lösungsmittel, nichtpolare Substanzen bevorzugt durch nichtpolare Lösungsmittel ausgewaschen.

Durch das Lösungsmittel werden aus dem Gasstrom feste und flüssige Schwebeteilchen sowie Komponenten, deren Taupunkt über der Temperatur des zum Waschen verwendeten Lösungsmittels bzw. Lösungsmitelgemischs liegt, abgeschieden.

Vorzugsweise führt man die Wäsche bei einer Temperatur durch, bei der sich zwischen den bei der Wäsche kondensierenden und verdampfenden Anteilen des Lösungsmittelgemischs ein Gleichgewicht einstellt. Dies führt dazu, daß sich in diesem Gleichgewicht die Menge des im Waschprozeß befindlichen Lösungsmittels weder erniedrigt noch erhöht. Der Gasstrom enthält nach der Wäsche das zurückzugewinnende Lösungsmittel bzw. Lösungsmittelgemisch in hoher Reinheit bzw. im gewünschten Mischungsverhältnis, so daß das zurückgewonnene Produkt ohne besondere Aufarbeitung wieder im Prozeß eingesetzt werden kann.

Man kann dem zur Wäsche verwendeten Lösungsmittel bzw. Lösungsmittelgemisch auch Hilfsstoffe zusetzen, welche die aus dem Gasstrom zu entfernenden Verunreinigungen chemisch und/oder physikalisch binden. Hierbei handelt es sich in erster Linie um störende Verunreinigungen, z. B. um korrodierende Zersetzungsprodukte. So können beispielsweise Säuren dadurch entfernt werden, daß man dem Lösungsmittel bzw. Lösungsmittelgemisch alkalische Substanzen zusetzt. Auch der umgekehrte Weg ist denkbar, d. h. man kann zur Entfernung von alkalischen Verunreinigungen dem Lösungsmittel bzw. Lösungsmittelgemisch Säuren zusetzen. Hilfsstoffe, die die zu entfernenden Verunreinigungen physikalisch binden, sind z. B. Adsorptionsmittel, die dem Lösungsmittel bzw. Lösungsmittelgemisch zur Entfernung von störenden Geruchssubstanzen zugesetzt werden können. Die Hilfsstoffe können auch dazu dienen, die physikalische Affinität des Lösungsmittels bzw. Lösungsmittelgemischs zu verstärken, um auf diese Weise die vollständige Abscheidung der Verunreinigungen zu fördern.

Beispiele derartiger Hilfsstoffe sind Hilfslösungsmittel, die eine höhere Affinität zu den zu entfernenden Verunreinigungen haben als die eigentlichen Waschlösungsmittel. Hierzu zählen beispielsweise nichtpolare Lösungsmittel, die zur besseren Entfernung von Teerteilchen einem Gemisch aus polaren Waschlösungsmitteln zugesetzt werden können.

Man kann das zur Wäsche verwendete Lösungsmittel bzw. Lösungsmittelgemisch entweder zusammen mit den abgeschiedenen Verunreinigungen oder nach Abtrennung der Verunreinigungen in den Prozeß zurückführen. Im ersten Fall handelt es sich um wiederverwertbare Verunreinigungen, z. B. um Harz- oder Polymerteilchen ; im zweiten Fall handelt es sich in der Regel um Verunreinigungen, die nicht oder nur beschränkt wiederverwendbar sind, z. B. um Zersetzungsprodukte, korrodierende Substanzen oder andere umweltschädigende Substanzen. Diese Substanzen können nach Abtrennung des Lösungsmittels z. B. verbrannt oder in andere nutzbare Substanzen umgewandelt werden.

Die Abtrennung der Verunreinigungen kann durch Abfiltrieren oder Abzentrifugieren erfolgen, wenn es sich um Verunreinigungen handelt, die im Lösungsmittel unlöslich sind bzw. die zusammen mit den ggf. verwendeten Hilfsstoffen unlösliche Reaktionsprodukte oder Adsorptionskomplexe gebildet haben. Das verwendete Lösungsmittel bzw. Lösungsmittelgemisch wird dann in flüssiger Form in den Prozeß zurückgeführt bzw. als Waschlösungsmittel verwendet.

Häufig erfolgt die Abtrennung der Verunreinigungen jedoch durch Destillation oder Fraktionierung, wobei das Lösungsmittel in Dampfform anfällt und zunächst dem Gasstrom zugeführt werden kann, aus dem es dann, gegebenenfalls zusammen mit den ursprünglich enthaltenen Lösungsmitteldämpfen und den bei der Wäsche verdampfenden Anteilen durch Kondensation und/oder Adsorption zurückgewonnen werden kann.

In vielen Fällen reicht eine Kondensation aus, insbesondere wenn man den an Lösungsmitteldämpfen verarmten Gasstrom zur erneuten Beladung mit Lösungsmitteldämpfen in den Prozeß zurückleitet. Häufig wird jedoch der Kondensation eine Adsorption nachgeschaltet, insbesondere, wenn der Gasstrom in die Atmosphäre abgeleitet wird oder wenn es darauf ankommt, einen weitgehend von Lösungsmitteldämpfen und gegebenenfalls auch von störenden Verunreinigungen (z. B. flüchtigen Geruchssubstanzen) befreiten Gasstrom in den Prozeß zurückzuführen.

Die Rückleitung des Gasstromes ist insbesondere dann zweckmäßig, wenn der Gasstrom ein Inertgas darstellt. Die Verwendung von Inertgasen empfiehlt sich bei brennbaren bzw. explosionsgefährlichen Lösungsmitteln. Das bevorzugte Inertgas ist Stickstoff. Daneben können auch Edelgase, Kohlendioxid sowie Verbrennungsabgase mit einem verminderten Sauerstoffgehalt verwendet werden.

Gegenstand der Erfindung ist ferner eine Anlage zur Durchführung des vorstehend beschriebenen Verfahrens, welche durch folgende Merkmale gekennzeichnet ist :

Eine Waschvorrichtung, die mit Zuleitungen für einen mit Verunreinigungen beladenen, Lösungsmitteldämpfe enthaltenden Gasstrom und für ein mindestens teilweise aus den Lösungsmitteldämpfen gewonnenes Lösungsmittel-Kondensat sowie mit Ableitungen für den von Verunreinigungen befreiten Gasstrom und für das verunreinigte Lösungsmittel bzw. Lösungsmittelgemisch versehen ist ; eine der Waschvorrichtung nachgeschaltete Trennvorrichtung zum Trennen des verunreinigten Lösungsmittels bzw. Lösungsmittelgemischs in eine die Verunreinigungen enthaltende Fraktion und in eine das Lösungsmittel in flüssiger oder Dampfform enthlatende Fraktion ; und eine der Wasch- oder Trennvorrichtung nachgeschaltete Kondensations- und/oder Adsorptionsvorrichtung zur Gewinnung eines Lösungsmittelkondensats aus dem Gasstrom.

Die Trennvorrichtung kann beispielsweise eine Filter- oder Zentrifugiervorrichtung darstellen, wenn die Verunreinigungen im Lösungsmittel unlöslich sind. In diesem Fall kann das Waschlösungsmittel ohne weitere Aufbereitung in den Prozeß zurückgeleitet bzw. erneut als Waschflüssigkeit verwendet werden, so daß die Kondensations- und/oder Adsorptionsvorrichtung zur Kondensation bzw. Adsorption der Lösungsmitteldämpfe aus der Wasschvorrichtung dieser unmittelbar nachgeschaltet sein kann.

Häufig ist aber die Trennvorrichtung eine Destillations-Trennvorrichtung, in der das verunreinigte Lösungsmittel bzw. Lösungsmittelgemisch in eine die Verunreinigungen enthaltende Bodenfraktion und in eine oder mehrere, die Lösungsmitteldämpfe enthaltenden Kopffraktionen trennbar ist. Die gasförmige Kopffraktion (en) wird (werden) dann in die der Trennvorrichtung nachgeschaltete Kondensations- und/oder Adsorptionsvorrichtung eingespeist.

Die Adsorptionsvorrichtung ist aus den vorstehend genannten Überlegungen vorzugsweise der Kondensationsvorrichtung nachgeschaltet. Eine oder beide dieser Vorrichtungen weisen eine mit einem Verdampfungsraum zum erneuten Beladen des Gasstromes mit Lösungsmitteldämpfen verbundene Ableitung für den an Lösungsmitteldämpfen verbundene Ableitung für den an Lösungsmitteldämpfen verarmten bzw. davon befreiten Gasstrom auf. Der Verdampfungsraum kann eine Kammer sein, in welcher ein Gegenstand mit einer Behandlungslösung beschichtet, imprägniert oder besprüht wird, worauf das Lösungsmittel bzw. Lösungsmittelgemisch verdampft wird. Der zu behandelnde Gegenstand kann aber auch außerhalb des Verdampfungsraumes mit der Behandlungslösung beschichtet, imprägniert oder besprüht und anschließend zur Verdampfung des Lösungsmittels bzw. Lösungsmittelgemischs in den Verdampfungsraum gebracht werden. Zur schnelleren Verdampfung des Lösungsmittels wird der zu behandelnde Gegenstand vorzugsweise erhitzt. In der Verdampfungskammer kann sich auch ein Bandtrockner befinden, auf dem die zu trocknenden Gegenstände bewegt und beispielsweise durch Heizstrahler erwärmt werden. Der Verdampfungsraum braucht nicht allseitig geschlossen zu sein, d. h. die Behandlung und Trocknung kann beispielsweise auch unter einem Abzug erfolgen, wenn als Trägergas Luft verwendet wird.

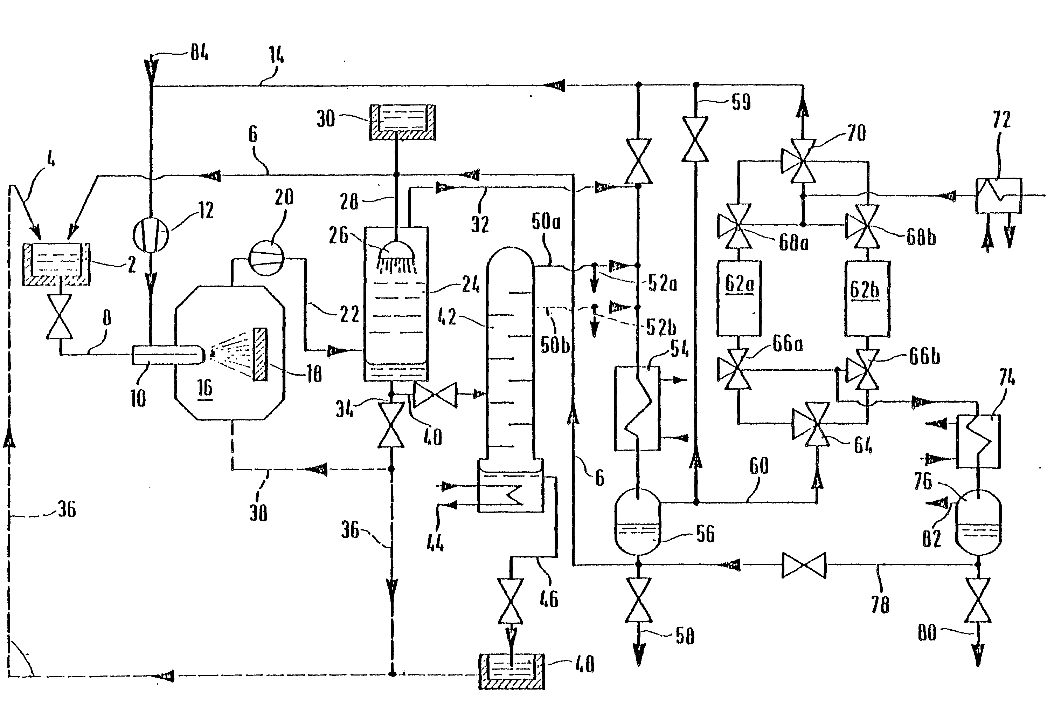

Eine erfindugnsgemäße Anlage ist nachstehend anhand der Zeichnung in nicht einschränkender Weise erläutert.

In einem Mischbehälter 2 wird eine Substanz, die anschließend als Verunreinigung im Gasstrom erscheint (aus der Leitung 4), mit dem aus der Leitung 6 kommenden Lösungsmittel bzw. Lösungsmittelgemisch vermischt und darin gelöst. Die Substanz ist beispielsweise ein filmbildender Kunststoff oder ein Klebstoff, die in organischen Lösungsmittel löslich sind. Sie Lösung der Substanz fließt durch die Leitung 8 zu einer Zerstäuberdüse 10, wo sie mit Hilfe eines durch den Kompressor 12 verdichteten Gasstromes aus der Leitung 14 in der Verdampfungskammer 16 zerstäubt und auf einen Gegenstand 18 gesprüht wird. In der vorzugsweise erwärmten Verdampfungskammer 16 verdampft das Lösungsmittel bzw. Lösungsmittelgemisch. Gleichzeitig bildet sich eine Wolke von Schwebeteilchen aus dem Kunststoff bzw. Klebstoff, die als Verunreinigungen aus dem Lösungsmitteldämpfe enthaltenden Gasstrom entfernt werden müssen. Zu diesem Zweck wird der Gasstrom über das Absauggebläse 20 und die Zuleitung 22 in die Waschvorrichtung 24 geleitet. Diese kann eine Füllkörper-Waschkolonne sein, der über eine Brause 26 und die Zuleitung 28 ein mindestens teilweise aus den Lösungsmitteldämpfen gewonnenes Lösungsmittelkondensat aus der Leitung 6 zugeführt wird. Ein Teil des Lösungsmittels wird als frisches Lösungsmittel aus dem Vorratsbehälter 30 zugeführt, um Lösungsmittelverluste auszugleichen bzw. um die Zusammensetzung des Lösungsmittelgemischs im gewünschten Sinn zu variieren. In der Leitung 28 können nach Bedarf auch Heiz- oder Kühlvorrichtungen vorgesehen sein, um die Temperatur des der Brause 26 zugeführten Lösungsmittels so einzustellen, daß sich zwischen den bei der Wäsche kondensierenden und verdampfenden Anteilen des Lösungsmittelgemischs das gewünschte Gleichgewicht einstellt. Die Temperaturregelung kann aber auch durch Kühlen bzw. Erwärmen der Waschvorrichtung bzw. des Gasstromes vorgenommen werden.

Dem zur Wäsche verwendeten Lösungsmittel bzw. Lösungsmittelgemisch können auch Hilfsstoffe (z. B. Säuren, Basen oder Adsorptionsmittel) zugesetzt werden. Diese werden zweckmäßig dem frischen Lösungsmittel im Vorratsbehälter 30 zugesetzt, können aber auch an einer beliebigen anderen Stelle in die Waschvorrichtung 24 eingespeist werden.

Die Waschvorrichtung 24 ist mit einer Ableitung 32 für den von den Verunreinigungen befreiten Gasstrom und mit einer Ableitung 34 für das mit den Verunreinigungen beladene Lösungsmittel bzw. Lösungsmittelgemisch versehen. Wenn diese Lösung (z. B. eine Harz- oder Klebstofflösung) ohne weiteres wiederverwendet werden kann, so kann man sie über die gestrichelt dargestellt Leitung in den Mischbehälter 2 zurückleiten, wo sie durch zu satz von neuem Kunststoff bzw. Klebstoff wieder aufkonzentriert werden kann. Ferner kann man die Lösung durch die gestrichelt dargestelte Leitung 38 in die Verdampfungskammer zurückleiten, wo das Lösungsmittel bzw. Lösungsmittelgemisch verdampft wird. Die als Verdampfungsrückstand hinterbleibenden Verunreinigungen können, wenn es sich um nicht mehr verwertbare Substanzen handelt, verbrannt werden.

Soll jedoch eine Trennung vorgenommen werden, so wird die Lösung über die Zuleitung 40 in die Trennvorrichtung 42 geleitet. Die Trennvorrichtung kann beispielsweise eine Filtrier- oder Zentrifugier-Trennvorrichtung sein, wenn die Verunreinigungen nicht im Lösungsmittel bzw. im Lösungsmittelgemisch löslich sind.

In der als Beispiel dargestellten Anlage ist die Trennvorrichtung 42 eine Destillations-Trennvorrichtung, d. h. eine Fraktionierkolonne, in der das verunreinigte Lösungsmittel bzw. Lösungsmittelgemisch in eine die Verunreinigungen enthaltende Bodenfraktion und eine oder mehrere, die Lösungsmitteldämpfe enthaltenden Kopffraktionen trennbar ist. Die Fraktionierkolonne kann durch eine Heizspirale 44 beheizt werden und besitzt eine Ableitung 46, die zu einem Sammelbehälter 48 führt, aus welchem die Bodenfraktion entweder über die Leitung 36 in den Mischbehälter 2 oder über die Leitung 38 in die Verdampfungskammer 16 geleitet werden kann, je nachdem, ob die abgetrennten Verunreinigungen wiederverwendbar sind oder nicht.

Die Lösungsmitteldämpfe enthaltende Kopffraktion kann durch die Leitung 50a in die Ableitung 32 aus der Waschvorrichtung eingespeist werden. Falls gewünscht, kann ein Teil der Kopffraktion über die gestrichelt dargestellte Leitung 52a abgezogen werden, wodurch die Zusammensetzung der Lösungsmitteldämpfe in der Ableitung 32 variiert werden kann. Es können auch mehrere Kopffraktionen (durch die gestrichelte Leitung 50b dargestellt) aus der Trennvorrichtung 42 abgezogen werden wobei die Ableitung 52b in Verbindung mit der Ableitung 52a dazu verwendet werden kann, um das Verhältnis der einzelnen Lösungsmitteldampf-Fraktionen, die in die Leitung 32 eingespeist werden, zu variieren.

Aus der Leitung 32 gelangt der Gasstrom mit den ursprünglich enthaltenen Lösungsmitteldämpfen, den bei der Wäsche in der Waschvorrichtung 24 verdampfenden Anteilen und der bzw. den Kopffraktionen aus den Leitungen 50a und 50b in den Kühler 54, wo in Abhängigkeit von der Temperatur des Kühlmittels der größte Teil der Lösungsmitteldämpfe auskondensiert. Das Lösungsmittelkondensat wird im Abscheider 56 gesammelt und kann entweder über die Leitung 6 zum Mischbehälter 2, zum Vorratsbehälter 30 oder direkt durch die Zuleitung 28 in die Waschvorrichtung 24 geleitet werden. Durch Einstellung der Temperatur im Kühler 54 ist eine weitere Regelung der Temperatur des in die Waschvorrichtung 24 gelangenden Lösungsmittels möglich. Das Lösungsmittel-Kondensat kann über die Leitung 58 abgezogen werden, wenn die Anlage außer Betrieb gesetzt werden soll bzw. wenn das Lösungsmittel gewechselt werden soll.

Wird keine Fraktionierkolonne verwendet und ist die Konzentration des Lösungsmitteldampfes im Gasstrom in der Leitung 32 verhältnismäßig niedrig, so kann die aus dem Kühler 54 und dem Lösungsmittelabscheider 56 bestehende Kondensationsvorrichtung entfallen. In diesem Fall wird der mit den Lösungsmitteldämpfen beladene Gasstrom aus der Leitung 32 über die Leitung 59 unmittelbar in die Leitung 14 zurückgeleitet.

Ist andererseits die Kondensation des Lösungsmitteldampfes im Kühler 54 unzureichend oder enthält der Gasstrom unkondensierbare Verunreinigungen (z. B. Geruchsstoffe), so führt man zweckmäßig noch eine Adsorption durch. Zu diesem Zweck wird der Gasstrom über die Leitung 60 in die aus den Adsorbern 62a und 62b bestehende Adsorptionsvorrichtung geleitet, und zwar über die Ventile 64, 66a, 68a und 70 durch den Absorber 62a, während der Inhalt des Absorbers 62b, der in einer vorausgegangenen Betriebsphase mit Lösungsmittel beladen wurde, gerade desorbiert wird. Zu diesem Zweck wird ein im Wärmeaustauscher 72 erhitztes Gas über das Ventil 68b durch den Adsorber 62b geleitet. Das den desorbierten Lösungsmitteldampf enthaltende Gas strömt über das Ventil 66b in den Kühler 74, wo die Lösungsmitteldämpfe auskondensieren. Das Lösungsmittelkondensat sammelt sich im Lösungsmittelabscheider 76 und kann entweder (über die Leitung 78) mit dem Lösungsmittelkondensat aus dem Lösungsmittelabscheider 56 vereinigt oder (über die Leitung 80) abgezogen werden. Das Desorptionsgas wird über die Leitung 82 entfernt, bzw. es kann im Kreislauf geführt werden, wenn es sich um eine Inertgas handelt.

Das aus dem Absorber 62a in die Leitung 14 strömende Gas ist praktisch frei von Lösungsmitteldämpfen und kann als Zerstäubungsgas in der Zerstäuberdüse 10 verwendet werden. Zum Ausgleich von Inertgasverlusten kann frisches Gas durch die Leitung 84 eingespeist werden.

Wenn die Kapazität des Adsorbers 62a erschöpft ist, wird der Absorber 62b auf Absorption geschaltet, wobei der mit Lösungsmitteldämpfen beladene Gasstrom aus der Leitung 60 durch die Ventile 64 und 66b strömt, im Absorber 62b von Lösungsmitteldämpfen befreit wird und durch die Ventile 68b und 70 in die Leitung 14 strömt. Gleichzeitig wird der Adsorber 62a auf Desorption geschaltet, wobei der erhitzte Gasstrom über die Ventile 68a und 66a in den Kühler 74 strömt, wo die im Adsorber 62a desorbierten Lösungsmitteldämpfe auskondensiert werden.

In den nachstehenden Beispielen sind einige Anwendungsmöglichkeiten des erfindungsgemäßen Verfahrens in nicht einschränkender Weise erläutert.

Beispiel 1

Zur Veredelung der Oberfläche von gegerbten Tierhäuten werden diese in einer Verdampfungskammer ähnlich der Kammer 16 mit einer Lösung besprüht, welche ein filmbildendes Polymer und anorganische Pigmente in ein Gemisch organischer Lösungsmitel (Cyclohexanon, Toluol, Methylethylketon, Aceton) enthält. Der aus der Verdampfungskammer abgesaugte Gasstrom enthält Lösungsmitteldämpfe, Pigmentteilchen und kugelförmige Polymerpartikel. Der Gasstrom wird in der Waschvorrichtung 24 mit Aceton gewaschen. Das aus dem Gasstrom durch Kondensation zurückgewonnene Lösungsmittelgemisch ist frei von Pigmenten und Polymeren und enthält das ursprünglich verwendete Lösungsmittelgemisch in einem praktisch unveränderten Verhältnis.

Das beim Waschprozeß in der Waschvorrichtung 24 anfallende Konzentrat von Pigment und Polymeren macht etwa 15 % der in den Sprühprozeß eingebrachten Festsubstanzen aus. Am Ende der Produktionsschicht wird die Temperatur in der Waschvorichtung soweit erhöht, daß durch zusätzliche Verdampfung von Lösungsmittel die Viskosität der Waschflüssigkeit in den Bereich der Viskosität des ursprünglich versprühten Produktes ansteigt. Das Konzentrat kann ohne weitere Aufarbeitung den nächsten Sprühchargen zugesetzt werden.

Nach diesem Beispiel wurde also keine destillative Abtrennung der Verunreinigungen von dem Lösungsmittelgemisch in einer gesonderten Trennvorrichtung vorgenommen.

Beispiel 2

Der aus einem Verdampfungskammer (in diesem Fall einem Trockner) entnommene Gasstrom enthält Methanol mit 4 bis 6 % phenolischen Verunreinigungen, die bei dem zugrundeliegenden Beschichtungsprozeß als Monomere verwendet werden. Als Waschlösung in der Waschvorrichtung 24 wird Methanol mit einem Gehalt von 0,5 bis 5 % Kaliumhydroxid verwendet. Durch Bildung von Kaliumphenolaten in der Waschlösung verringert sich der Phenolgehalt im Gasstrom auf weniger als 0,1 %, so daß das daraus zurückgewonnene Methanol ohne weitere destillative Auftrennung oder eine sonstige Zwischenbehandlung in den Produktionsprozeß zurückgeleitet werden kann.

Zur vollständigen Trennung der Kaliumphenolate vom Methanol wird am Ende des Produktionsprozesses ein Nadelvliesstoff (Filz) mit der aus der Wachvorrichtung abgezogenen Lösung getränkt und der Verdampfungskammer zugeführt. Dort verdampft das als Lösungsmittel dienende Methanol, geht in den Gasstrom über und wird durch Kondensation zurückgewonnen.

Das mit den Kaliumphenolaten behaftete Nadelvlies wird durch Verbrennen umweltunschädlich gemacht.

Beispiel 3

Bei der Beschichtung von Flächenmaterialien mit einer Lösung von Polyacrylaten enthält das der Verdampfungskammer (in diesem Fall einem Trockner) entweichende Gas neben Benzin (Kp 65 bis 95 °C) etwa 3 Gew.-% (bezogen auf das eingesetzte Polymer) in die Gasphase übergegangenen monomeren 2-Ethylhexylacrylsäureester. Dieser wird wegen seines höheren Siedepunkts in der mit Benzin beschickten Wachvorrichtung so weitgehend entfernt, daß in dem durch Kondensation wiedergewonnenen Lösungsmittel gaschromatographisch nur noch Spuren davon nachgewiesen werden können.

Beispiel 4

Die Beschichtung von Papier als Trägermaterial mit Lösungen von organischen Polymeren (als Klebstoffe) und die anschliessende Trocknung in einer Verdampfungskammer führt zu einem Abgasstrom, der neben Aceton und Benzin aus dem Papier stammendes Wasser enthält.

Wird dieser Abgasstrom in der Waschvorrichtung 24 mit einer wäßrigen Waschphase gewaschen, so werden Aceton und Wasser nahezu vollständig aus der Gasphase entfernt, so daß das in der Kondensationsvorrichtung (54, 56) kondensierte Benzin ohne weitere Reinigung wiederverwendet werden kann. Die aus der Waschvorrichtung 24 austretende Waschflüssigkeit wird in der Kolonne 42 destillativ aufbereitet, wobei Wasser als Bodenfraktion abgezogen und verworfen wird, während Aceton als Kopffraktion gewonnen und nach dem Kondensieren dem Benzin zugesetzt wird, so daß im wesentlichen das ursprüngliche Lösungsmittelgemisch wiedergewonnen werden kann.

Das erfindungsgemäße Verfahren führt zu erheblichen Kosteneinsparungen hinsichtlich Energie, Materialkosten und Entsorgungsaufwand. Durch die Auswahl eines geeigneten, im jeweiligen Arbeitsprozeß vorkommenden Lösungsmittels als Waschflüssigkeit wird die Reinheit des zurückgewonnenen Lösungsmittels bzw. Lösungsmittelgemisches sichergestellt bzw. so weit verbessert, daß in zahlreichen Fällen die direkte Zurückführung des Lösungsmittels in den Produktionsprozeß ohne Zwischenaufbereitung möglich ist. Die im Waschprozeß ausgeschiedenen Komponente können entweder in den Produktionsprozeß zurückgeführt oder im Hinblick auf ihr Volumen bzw. ihre Konsistenz so gesteuert werden, daß preiswerte Entsorgung bzw. Wiederaufbereitung möglich wird.

**Patentansprüche**

1. Verfahren zur Entfernung von Verunreinigungen aus einem Lösungsmitteldämpfe enthaltenden Gasstrom, dadurch gekennzeichnet, daß man den Gasstrom zur Entfernung der darin als flüssige oder feste Schwebeteilchen enthaltenen Verunreinigungen mit dem Kondensat eines oder mehrerer darin enthaltener Lösungsmitteldämpfe wäscht, das mit den Schwebeteilchen verunreinigte Gemisch in eine die Verunreinigungen enthaltende Fraktion und in eine das Lösungsmittel in flüssiger oder in Dampfform enthaltende Kopffraktion trennt und das Lösungsmittelkondensat aus dem Gasstrom gewinnt.

2. Verfahren nach Anspruch 1, dadurch gekennzeichnet, daß man den Gasstrom mit einer Lösungsmittel-Kondensatfraktion wäscht, welche die größte Affinität zu den zu entfernenden Verunreinigungen hat.

3. Verfahren nach Anspruch 1 oder 2, dadurch gekennzeichnet, daß man die Wäsche bei einer Temperatur durchführt, bei der sich zwischen den bei der Wäsche kondensierenden und verdampfenden Anteilen des Lösungsmittelgemisches ein Gleichgewicht einstellt.

4. Verfahren nach einem der Ansprüche 1 bis 3, dadurch gekennzeichnet, daß man dem zur Wäsche verwendeten Lösungsmittel bzw. Lösungsmittelgemisch Hilfsstoffe zusetzt, welche die aus dem Gasstrom zu entfernenden Verunreinigungen chemisch und/oder physikalisch binden.

5. Verfahren nach einem der Ansprüche 1 bis 4, dadurch gekennzeichnet, daß man das zur Wäsche verwendete Lösungsmittel bzw. Lösungsmittelgemisch entweder zusammen mit den abgeschiedenen Verunreinigungen oder nach Abtrennung der Verunreinigungen in den Prozeß zurückführt.

6. Verfahren nach Anspruch 5, dadurch gekennzeichnet, daß man das Lösungsmittel bzw. Lösungsmittelgemisch nach Abtrennung der Verunreinigungen dem Gasstrom zuführt und es, gegebenenfalls zusammen mit den ursprünglich enthaltenen Lösungsmitteldämpfen und den bei der Wäsche verdampfenden Anteilen aus dem Gasstrom durch Kondensation und/oder Adsorption zurückgewinnt.

7. Verfahren nach Anspruch 6, dadurch gekennzeichnet, daß man die Adsorption der Kondensation nachschaltet.

8. Verfahren nach einem der Ansprüche 1 bis 7, dadurch gekennzeichnet, daß man den an Lösungsmitteldämpfen verarmten oder davon befreiten Gasstrom zur erneuten Beladung mit Lösungsmitteldämpfen in den Prozeß zurückleitet.

9. Verfahren nach einem der Ansprüche 1 bis 8, dadurch gekennzeichnet, daß der Gasstrom ein Inertgas, wie Stickstoff, darstellt.

10. Anlage zur Durchführung des Verfahrens nach einem der Ansprüche 1 bis 9, gekennzeichnet durch : eine Waschvorrichtung (24), die mit Zuleitungen (22, 28) für einen mit Verunreinigungen beladenen, Lösungsmitteldämpfe enthaltenden Gasstrom und für ein mindestens teilweise aus den Lösungsmitteldämpfen gewonnenes Lösungsmittelkondensat sowie mit Ableitungen (32, 34) für den von Verunreinigungen befreiten Gasstrom und für das verunreinigte Lösungsmittel bzw. Lösungsmittelgemisch versehen ist ; eine der Waschvorrichtung (24) nachgeschaltete Trennvorrichtung (42) zum Trennen des verunreinigten Lösungsmittels bzw. Lösungsmittelgemischs in eine die Verunreinigungen enthaltende Fraktion und in eine das Lösungsmittel in flüssiger oder in Dampfform enthaltende Kopffraktion ; und eine der Waschvorrichtung (24) oder der Trennvorrichtung (42) nachgeschaltete Kondensations- und/oder Adsorptionsvorrichtung (54, 56 ; 62a, 62b) zur Gewinnung eines Lösungsmittelkondensats aus dem Gasstrom.

11. Anlage nach Anspruch 10, dadurch gekennzeichnet, daß die Trennvorrichtung (42) eine Destillations-Trennvorrichtung darstellt, in der das verunreinigte Lösungsmittel bzw. Lösungsmittelgemisch in eine die Verunreinigungen enthaltende Bodenfraktion une eine oder mehrere, die Lösungsmitteldämpfe enthaltenden Kopffraktionen trennbar ist.

12. Anlage nach Anspruch 10 oder 11, dadurch gekennzeichnet, daß die Adsorptionsvorrichtung (62a, 62b) der Kondensationsvorrichtung (54, 56) nachgeschaltet ist.

13. Anlage nach einem der Ansprüche 10 bis 11, dadurch gekennzeichnet, daß die Kondensations- und/oder Adsorptionsvorrichtung (54, 56 ; 62a, 62b) eine mit einem Verdampfungsraum (16) zum erneuten Beladen des Gasstroms mit Lösungsmitteldämpfen verbundene Ableitung (14) für den an Lösungsmitteldämpfen verarmten bzw. davon befreiten Gasstrom aufweist.

**Claims**

1. A process for removing impurities from a gas stream containing solvent vapours, characterised in that the gas stream is washed with the condensate of one or more solvent vapours contained therein so as to remove the impurities contained therein as liquid or solid suspended particles, the mixture contaminated with the suspended particles is separated into one fraction containing the impurities and into a top fraction containing the solvent in the form of a liquid or vapour, and the solvent condensate is recovered from the gas stream.

2. A process according to Claim 1, characterised in that the gas stream is washed with a solvent condensate fraction which has the greatest possible affinity for the impurities to be removed.

3. A process according to Claim 1 or 2, characterised in that the washing is carried out at a temperature at which an equilibrium is established between those components of the solvent mixture which condense and those which vaporize during the washing.

4. A process according to one of Claims 1 to 3, characterised in that adjuvant substances are added to the solvent or solvent mixture used for washing, which adjuvant substances chemically and/or physically bond the impurities to be removed from the gas stream.

5. A process according to one of Claims 1 to 4, characterised in that the solvent or solvent mixture used for washing is returned to the process either together with the separated impurities or after separation of the impurities.

6. A process according to Claim 1, characterised in that after separation of the impurities the solvent or solvent mixture is fed to the gas stream and it is recovered from the gas stream by condensation and/or adsorption, optionally together with the originally contained solvent vapours and the components vaporizing during washing.

7. A process according to Claim 6, characterised in that the adsorption is carried out downstream of the condensation.

8. A process according to one of Claims 1 to 7, characterised in that the gas stream depleted of solvent vapours of freed thereof is fed back into the process for renewed charging with solvent vapours.

9. A process according to one of Claims 1 to 7, characterised in that an inert gas, such as nitrogen, constitutes the gas stream.

10. An installation for carrying out the process according to one of Claims 1 to 9, characterised by a washing device (24) with is provided with inflow lines (22, 28) for a gas stream containing solvent vapours charged with impurities and for a solvent condensate recovered at least partly from the solvent vapours, and also with outflow lines (32, 34) for the gas stream freed of impurities and for the contaminated solvent or solvent mixture ; a separating device (42) downstream of the washing device (24) for separating the contaminated solvent or solvent mixture into one fraction containing the impurities and into a top fraction containing the solvent in the form of a liquid or vapour ; and a condensation device and/or adsorption device (54, 56 ; 62a, 62b) for recovering a solvent condensate from the gas stream.

11. An installation according to Claim 10, characterised in that the separating device (42) constitutes a distillation/separation device in which the contaminated solvent or solvent mixture can be separated into a bottom fraction containing the impurities and one or more top fractions containing the solvent vapours.

12. An installation according to Claim 10 or 11, characterised in that the adsorption device (62a, 62b) is disposed downstream of the condensation device (54, 56).

13. An installation according to one of Claims 10 to 11, characterised in that the condensation device and/or absorption device (54, 56 ; 62a, 62b) has an outflow line (14), connected to a vaporization chamber (16) for recharging the gas stream with solvent vapours, for the gas stream depleted of solvent vapours of freed thereof.

**Revendications**

1. Procédé pour l'élimination d'impuretés d'un courant gazeux contenant des vapeurs de solvant, caractérisé par le fait qu'on lave le courant gazeux, pour éliminer les impuretés qui y sont contenues sous forme de particules liquides ou solides en suspension, avec le condensat d'une ou plusieurs vapeurs de solvant qui y sont contenues, que l'on sépare le mélange contenant comme impuretés les particules en suspension en une fraction contenant les impuretés et une fraction de tête contenant le solvant sous forme liquide ou sous forme de vapeur et que l'on retire du courant gazeux le condensat de solvant.

2. Procédé selon la revendication 1, caractérisé par le fait qu'on lave le courant gazeux avec une fraction de condensat de solvant qui a la plus grande affinité pour les impuretés à éliminer.

3. Procédé selon l'une des revendications 1 et 2, caractérisé par le fait que l'on effectue le lavage à une température où il s'établit un équilibre entre les fractions du mélange de solvants qui se condensent et s'évaporent lors du lavage.

4. Procédé selon l'une des revendications 1 à 3, caractérisé par le fait que l'on ajoute, au solvant ou mélange de solvants utilisé pour le lavage, des adjuvants qui fixent chimiquement et/ou physiquement les impuretés à éliminer du courant gazeux.

5. Procédé selon l'une des revendications 1 à 4, caractérisé par le fait que l'on ramène au processus le solvant ou mélange de solvants utilisé pour le lavage, soit en même temps que les impuretés séparées, soit après séparation des impuretés.

6. Procédé selon la revendication 5, caractérisé par le fait que l'on amène au courant gazeux le solvant, après séparation des impuretés, et qu'on le récupère du courant gazeux, par condensation et/ou adsorption, éventuellement en même temps que les vapeurs de solvant primitivement contenues et les fractions qui s'évaporent lors du lavage.

7. Procédé selon la revendication 6, caractérisé par le fait que l'on effectue l'adsorption à la suite de la condensation.

8. Procédé selon l'une des revendications 1 à 7, caractérisé par le fait que l'on ramène au processus le courant gazeux appauvri en vapeurs de solvant ou débarrassé de celles-ci, pour le charger à nouveau de vapeurs de solvant.

9. Procédé selon l'une des revendications 1 à 8, caractérisé par le fait que le courant gazeux constitue un gaz inerte tel que l'azote.

10. Installation pour la mise en œuvre du procédé selon l'une des revendications 1 à 9, caractérisé par :

— un appareil de lavage (24) qui est muni de tuyaux d'amenée (22, 28) pour un courant gazeux contenant des vapeurs de solvant et pour un condensat de solvant tiré au moins partiellement des vapeurs de solvant, ainsi que de tuyaux d'évacuation (32, 34) pour le courant gazeux débarrassé d'impuretés et pour le solvant ou mélange de solvants impur ;

— un appareil de séparation (42) branché à la suite de l'appareil de lavage (24) pour la séparation du solvant ou mélange de solvants impur en une fraction contenant les impuretés et une fraction de tête contenant le solvant sous forme liquide ou sous forme de vapeur ; et

— un appareil de condensation et/ou d'adsorption (54, 56 ; 62a, 62b) branché à la suite de l'appareil de lavage (24) ou de l'appareil de séparation (42) pour tirer du courant gazeux un condensat de solvant.

11. Installation selon la revendication 10, caractérisée par le fait que l'appareil de séparation (42) constitue un appareil de séparation par distillation dans lequel le solvant ou mélange de solvants impur peut être séparé en une fraction de queue contenant les impuretés et une ou plusieurs fractions de tête contenant les vapeurs de solvant.

12. Installation selon l'une des revendications 10 et 11, caractérisée par le fait que l'appareil d'adsorption (62a, 62b) est branché à la suite de l'appareil de condensation (54, 56).

13. Installation selon l'une des revendications 10 et 11, caractérisée par le fait que l'appareil de condensation et/ou d'adsorption (54, 56 ; 62a, 62b) présentent un tuyau d'évacuation (14) destiné au courant gazeux appauvri en vapeurs de solvant ou débarrassé de celles-ci, et relié à une cavité d'évaporation (16) pour charger à nouveau le courant gazeux de vapeurs de solvant.

1